# EUROPÄISCHE PATENTSCHRIFT

(11) **EP 3 484 707 B1**
(45) Veröffentlichungstag und Bekanntmachung des Hinweises auf die Patenterteilung: **12.08.2020**
(21) Anmeldenummer: 17730195.9
(22) Anmeldetag: 19.06.2017
(51) Int. Cl.: B32B 17/10, B32B 5/14, B32B 3/08

(54) **FAHRZEUG-VERBUNDSCHEIBE MIT OPTIMIERTEM STRAHLENGANG FÜR EINEN DARAN ANGEBRACHTEN SENSOR**
VEHICLE COMPOSITE PANE WITH OPTIMIZED BEAM PATH FOR A SENSOR ATTACHED TO SAME
VITRE COMPOSITE DE VEHICULE AUTOMOBILE DOTEE DE TRAJECTOIRE DE RAYONS OPTIMISEE POUR UN CAPTEUR INTEGRE

(30) Priorität: 18.07.2016 EP 16179916
(43) Veröffentlichungstag der Anmeldung: 22.05.2019
(73) Patentinhaber: SAINT-GOBAIN GLASS FRANCE, 92400 Courbevoie (FR)
(72) Erfinder: SCHMALBUCH, Klaus, 84220 Goult (FR); WOHLFEIL, Dirk, 4730 Raeren (BE); LINN, Malte, 52074 Aachen (DE); ARNDT, Martin, 52066 Aachen (DE); EFFERTZ, Christian, 52080 Aachen (DE)
(74) Vertreter: Feist, Florian Arno
(86) Internationale Anmeldenummer: PCT/EP2017/064925
(87) Internationale Veröffentlichungsnummer: WO 2018/015086

(56) Entgegenhaltungen:
- DE-A1-102013 210 887
- US-A1- 2006 228 529
- US-A1- 2007 148 472
- US-B1- 6 473 250

## Beschreibung

Die Erfindung betrifft eine Fahrzeug-Verbundscheibe, ein Verfahren zu ihrer Herstellung und ihre Verwendung.

Moderne Fahrzeuge werden mit einer steigenden Anzahl an optischen Sensoren ausgestattet, deren Signale zur Unterstützung des Fahrers verwendet werden. Beispiele solcher Sensoren sind Kameras wie Videokameras oder Nachtsichtkameras, Regensensoren, Lichtsensoren oder Abstandsmesser. Nach vorne gerichtete Sensoren werden häufig an der innenraumseitigen Oberfläche der Windschutzscheibe befestigt, typischerweise mittig in der Nähe der Oberkannte. Die Sensoren werden durch einen opaken Abdeckdruck auf der Windschutzscheibe verdeckt. Dazu ist der übliche periphere, rahmenartige Abdeckdruck, der in erster Linie als UV-Schutz für den Montagekleber der Windschutzscheibe dient, im Bereich der Sensoren deutlich in Richtung der Scheibenmitte vergrößert.

Herkömmliche Sensoren sind so an der Windschutzscheibe angebracht, dass ihre Detektionsrichtung horizontal verläuft. Da die Windschutzscheibe stark geneigt im Fahrzeug installiert ist, beispielsweise mit einem Einbauwinkel von 60° zur Vertikalen, schließt die Detektionsrichtung des Sensors einen sehr spitzen Winkel von etwa 30° mit der Windschutzscheibe ein. Daraus resultiert ein vergleichsweise großer, im Wesentlichen trapezförmiger sogenannter Sensorbereich (oder Sensorfenster) der Windschutzscheibe. Der Sensorbereich ist derjenige Bereich der Windschutzscheibe, durch den verlaufende Strahlung durch den Sensor detektiert wird. Der Sensorbereich der Windschutzscheibe ist also der Bereich, der im Detektionsstrahlengang des Sensors liegt.

Je mehr Sensoren an der Scheibe befestigt werden sollen, desto mehr Fläche der Windschutzscheibe wird durch die Summe der Sensorbereiche eingenommen und desto größer muss der Abdeckdruck ausgebildet werden, der die Sensoren verdecken soll. Dadurch wird allerdings die Gesamt-Lichttransmission durch die Scheibe herabgesetzt und sie wirkt häufig ästhetisch weniger ansprechend.

Der Sensorbereich der Windschutzscheibe lässt sich dadurch verkleinern, dass der Winkel zwischen Sensor und Windschutzscheibe möglichst groß gewählt wird, idealerweise 90°.

Damit die Detektionsrichtung des Sensors aber horizontal nach vorne gerichtet bleibt, muss der Detektionsstrahlengang in oder hinter der Scheibe entsprechend gelenkt werden. Hierzu sind Koppelkörper bekannt, die zwischen dem Sensor und der Scheibe angebracht werden und aufgrund ihres Brechungsindex horizontal durch die Scheibe fallende Strahlung in den Sensor zu leiten. Ein solcher Koppelkörper oder Lichtleitkörper ist beispielsweise aus US 2008/0284850 A1 bekannt. Ein außen angebrachter Koppelkörper erhöht jedoch den Platzbedarf der Anbauteile und ist anfällig für Beschädigungen.

Der vorliegenden Erfindung liegt die Aufgabe zugrunde, eine weiter verbesserte Fahrzeug-Verbundscheibe bereitzustellen, durch welche die Größe des Sensorbereichs eines angebrachten Sensors verringert wird.

Die Aufgabe der vorliegenden Erfindung wird erfindungsgemäß durch eine Fahrzeug-Verbundscheibe gemäß Anspruch 1 gelöst. Bevorzugte Ausführungen gehen aus den Unteransprüchen hervor.

Die erfindungsgemäße Fahrzeug-Verbundscheibe umfasst mindestens eine Außenscheibe und eine Innenscheibe, die über eine polymere Zwischenschicht miteinander verbunden sind. Die Außenscheibe und die Innenscheibe bestehen typischerweise aus Glas. Die Fahrzeug-Verbundscheibe ist zur Abtrennung eines Fahrzeuginnenraums von einer äußeren Umgebung vorgesehen. Die Fahrzeug-Verbundscheibe ist also eine Fensterscheibe, die in eine Fensteröffnung der Fahrzeugkarosserie eingesetzt ist oder dafür vorgesehen ist. Die erfindungsgemäße Fahrzeugscheibe ist insbesondere eine Windschutzscheibe eines Kraftfahrzeugs. Mit Innenscheibe wird diejenige Scheibe bezeichnet, welche dafür vorgesehen ist, in Einbaulage dem Innenraum des Fahrzeugs zugewandt zu sein. Mit Außenscheibe wird diejenige Scheibe bezeichnet, welche dafür vorgesehen ist, in Einbaulage der äußeren Umgebung des Fahrzeugs zugewandt zu sein. Diejenige Oberfläche der jeweiligen Scheibe, welche in Einbaulage der äußeren Umgebung des Fahrzeugs zugewandt ist, wird als außenseitige Oberfläche bezeichnet. Diejenige Oberfläche der jeweiligen Scheibe, welche in Einbaulage dem Innenraum des Fahrzeugs zugewandt ist, wird als innenraumseitige Oberfläche bezeichnet.

Die Verbundscheibe ist insbesondere dafür vorgesehen und geeignet, dass ein Sensor an ihrer Innenscheibe befestigt wird. Dazu kann die von der Zwischenschicht abgewandte Oberfläche der Innenscheibe mit geeigneten Halterungen ausgestattet sein, beispielsweise mit einem *Bracket* oder Gehäuse. Der Bereich der Verbundscheibe, der im Detektionsstrahlengang des Sensors angeordnet ist beziehungsweise dafür vorgesehen ist, wird als Sensorbereich oder Sensorfenster bezeichnet. Strahlung, die im Sensorbereich durch die Verbundscheibe tritt, wird durch den Sensor detektiert.

Ein Bereich der Zwischenschicht ist aus einer ersten Keileinlage und einer zweiten Keileinlage. Die beiden Keileinlagen bestehen aus unterschiedlichem Material, insbesondere aus Materialien mit unterschiedlichen Brechungsindizes. Der besagte Bereich der Zwischenschicht entspricht mindestens dem Sensorbereich, kann aber auch größer sein. Die Größe des besagten Bereichs der Zwischenschicht beträgt beispielsweise von 10 cm² bis 100 cm², bevorzugt von 25 cm² bis 50 cm².

Die beiden Keileinlagen sind jeweils keilförmig ausgebildet, insbesondere in Form eines rechtwinkligen Keils. Jede Keileinlage weist zwei aufeinander stehende, insbesondere etwa senkrecht aufeinander stehende Grundflächen auf und eine die Grundflächen verbindende Keilfläche. Das bedeutet, dass jede der drei Fläche mit den beiden anderen Flächen verbunden ist, wobei zwei gegenüberliegende Seitenkante die Verbindungskanten bilden, so dass die zusammengesetzten Flächen einen dreieckigen Querschnitt aufweisen. Die Keilflächen der beiden Keileinlagen sind, bevorzugt deckend, aufeinander gelegt mit entgegengesetzter Keilrichtung: in der Richtung von der Unterkante zur Oberkante der Verbundscheibe nimmt die Dicke der ersten Keileinlage zu und die Dicke der zweiten Keileinlage ab.

Eine rechtwinklige Keilform weist drei im Wesentlichen viereckige, insbesondere rechteckige Oberflächen auf. Die erste und zweite rechteckige Oberfläche sind entlang einer Verbindungskante in einem rechten Winkel miteinander verbunden. Aufgrund der geringen Dicke einer Fahrzeug-Verbundscheibe ist eine der besagten Oberflächen deutlich länger als die andere, im Sinne der Erfindung werden die beiden Oberflächen folglich als lange Grundfläche und kurze Grundfläche bezeichnet. Die dritte Oberfläche schließt sich an die Seitenkanten der langen und kurzen Grundfläche, die der rechtwinkligen Verbindungskante gegenüberliegen, und verbindet diese. Diese Oberfläche schließt jeweils einen spitzen Winkel mit der langen und der kurzen Grundfläche ein und wird im Sinne der Erfindung als Keilfläche (schräge Oberfläche) bezeichnet. Der Winkel zwischen der langen Grundfläche und der Keilfläche wird im Sinne der Erfindung als Keilwinkel bezeichnet. Die Keilform weist außerdem zwei dreieckige Stirnflächen auf, die die Form abschließen.

Die beiden Keilflächen der beiden Keileinlagen sind aneinander gelegt, so dass die beiden Keileinlagen gemeinsam einen Quader bilden, wobei die beiden langen Grundflächen und die beiden kurzen Grundflächen der beiden Keileinlagen einander jeweils gegenüberliegen und parallel zueinander angeordnet sind. Die langen Grundflächen der beiden Keileinlagen bilden zwei gegenüberliegende Hauptflächen des Quaders aus, über die eine Keileinlage mit der Außenscheibe und die andere Keileinlage mit der Innenscheibe verbunden ist. Die kurzen Grundflächen verlaufen zwischen den Scheibenoberflächen, insbesondere etwa senkrecht zu den Scheibenoberflächen. Die aus den aneinander liegenden Keilflächen gebildete Grenzfläche der beiden Keileinlagen verläuft schräg zwischen den besagten Hauptflächen, und zwar so, dass die Keilrichtung vertikal angeordnet ist. Das bedeutet, dass die Richtung, in der die Keile ihre Dicke ändern, der Richtung zwischen Oberkante und Unterkante der Verbundscheibe entspricht. Die Oberkante ist dabei diejenige Seitenkante, die dafür vorgesehen ist, in Einbaulage nach oben zum Fahrzeugdach zu weisen (Dachkante). Die Unterkante ist diejenige Seitenkante, die dafür vorgesehen ist, in Einbaulage nach unten zum Motorraum zu weisen (Motorkante).

Die vorstehende Beschreibung der keilförmigen Keileinlagen und deren quaderförmiger gemeinsamer Anordnung bezieht sich auf den ungekrümmten Ausgangszustand der Keileinlagen. Da reale Fahrzeugscheiben häufig gekrümmt sind und sich die flexiblen polymeren Keileinlagen der Krümmung anpassen, weichen die Keileinlagen in der fertiggestellten Verbundscheibe von der idealen Keilform ab. So sind die beiden Hauptflächen und auch die Grenzfläche zwischen den Keileinlagen leicht gekrümmt und die Winkel zwischen den Seitenflächen können sich im Vergleich zum ungekrümmten Ausgangszustand leicht verändern. Der Fachmann wird die Keileinlagen und den erfinderischen Gedanken dennoch auch an der fertiggestellten, gekrümmten Scheibe erkennen.

Ebenso geht die Beschreibung der rechtwinkligen Keileinlagen, die einen Quader bilden, davon aus, dass die der Zwischenschicht zugewandten Oberflächen der Glasscheiben parallel zueinander angeordnet sind. Bei realen Scheiben können leichte Abweichungen von der idealen Form auftreten. Dies ist insbesondere dann der Fall, wenn die Oberflächen der Glasscheiben nicht parallel sind. Solche nicht-parallelen Scheiben sind beispielsweise im Zusammenhang mit Head-Up-Displays (HUD) gebräuchlich, um die durch Reflexion an den beiden äußeren Oberflächen der Verbundscheibe erzeugten Anzeigebilder miteinander zu überlagern, um damit sogenannte Geisterbilder zu vermeiden. Verbundscheiben für HUDs werden dazu typischerweise mit einer keilförmigen Verbindungsfolie hergestellt. Die Abweichungen von der idealen rechtwinkligen Keilform der einzelnen Keileinlagen und von der idealen Quaderform der zusammengesetzten Keileinlagen werden aber gering sein, so dass der Fachmann die erfinderische Idee eindeutig erkennen kann.

Diejenige Keileinlage, deren Dicke in der Richtung von der Unterkante zur Oberkante der Verbundscheibe zunimmt, wird im Sinne der Erfindung als erste Keileinlage bezeichnet. Diejenige Keileinlage, deren Dicke in der Richtung von der Unterkante zur Oberkante der Verbundscheibe abnimmt, wird im Sinne der Erfindung als zweite Keileinlage bezeichnet. In einer Ausgestaltung der Erfindung ist die erste Keileinlage der Außenscheibe zugewandt und mit dieser verbunden, während die zweite Keileinlage der Innenscheibe zugewandt und mit dieser verbunden ist. In einer alternativen Ausgestaltung der Erfindung ist die erste Keileinlage der Innenscheibe zugewandt und mit dieser verbunden, während die zweite Keileinlage der Außenscheibe zugewandt und mit dieser verbunden ist.

Die beiden Keileinlagen weisen bevorzugt im Wesentlichen die gleiche Form auf und sind komplementär, das heißt mit unterschiedlicher Keilrichtung, aufeinander angeordnet.

Mindestens eine der beiden Keileinlagen weist einen Brechungsindex auf, der sich vom Brechungsindex der Außenscheibe und der Innenscheibe unterscheidet. Dadurch wird die durch den Sensorbereich tretende Strahlung vorteilhaft abgelenkt. Bei einer üblichen Fahrzeug-Verbundscheibe, die typischerweise aus zwei Scheiben aus Kalk-Natronglas und eine PVB-Zwischenschicht besteht, treten keine signifikanten Änderungen des Brechungsindex innerhalb der Verbundscheibe auf. Ein horizontal durch die Scheibe tretender Strahl wird dadurch parallelversetzt, bleibt aber auch nach Durchtritt durch die Scheibe horizontal, so dass der Sensor parallel zur Horizontalen ausgerichtet werden muss, um den Strahl zu detektieren. Durch die mindestens eine Keileinlage mit abweichendem Brechungsindex kann der horizontal einfallende Strahl abgelenkt werden, so dass der Sensor nicht mehr horizontal angeordnet werden muss, sondern mit einem größeren Winkel zur Verbundscheibe angeordnet werden kann. Dadurch wird aus einfachen geometrischen Überlegungen heraus der Sensorbereich der Verbundscheibe kleiner und nimmt weniger Fläche der Verbundscheibe ein, wodurch folglich auf der Abdeckdruck zur Verdeckung des Sensors kleiner ausgestaltet werden kann. Insbesondere, wenn mehrere Sensoren benachbart zueinander vorhanden sind, ist die Erfindung besonders vorteilhaft, weil ein übermäßig großer Abdeckdruck zur Kaschierung der Gesamtheit der Sensorbereiche vermieden werden kann.

Um eine vorteilhafte Ablenkung der Strahlung zu erreichen, sollte die Differenz zwischen dem Brechungsindex der Keileinlage und dem Brechungsindex von Außenscheibe und Innenscheibe mindestens 0,1 betragen. Besonders gute Ergebnisse werden erzielt, wenn der Unterschied mindestens 0,2 beträgt. Der Brechungsindex im Sinne der Erfindung wird bei einer Wellenlänge von 550 nm gemessen.

Je größer der Keilwinkel ist, desto stärker ist die Ablenkung der Strahlung und desto ausgeprägter ist der erfinderische Effekt. Der Größe des Keilwinkels sind jedoch durch die geometrischen Abmessungen Grenzen gesetzt, wobei insbesondere die kurze Grundfläche der Keileinlagen durch die Scheibendicke, beziehungsweise den Abstand zwischen Außen- und Innenscheibe begrenzt ist. Der Keilwinkel der beiden Keileinlagen sollte mindestens 1°, bevorzugt mindestens 2° betragen, um eine vorteilhafte Ablenkung der Strahlung zu bewirken.

Der Brechungsindex der Außenscheibe und der Innenscheibe ist bevorzugt gleich und beträgt bevorzugt von 1,4 bis 1,6, besonders bevorzugt von 1,5 bis 1,6 oder von 1,45 bis 1,55, insbesondere von 1,50 bis 1,55. Die Außenscheibe und Innenscheibe von Fahrzeug-Verbundscheiben bestehen typischerweise aus Kalk-Natron-Glas. Kalk-Natron-Glas weist Brechungsindizes von 1,5 bis 1,6 auf, insbesondere von 1,5 bis 1,55, beispielsweise 1,52. Es können grundsätzlich aber auch andere Glassorten verwendet werden, wie Borosilikatglas (Brechungsindex beispielsweise 1,47), Aluminosilikatglas (Brechungsindex beispielsweise 1,5) oder Quarzglas (Brechungsindex beispielsweise 1,46). Die Dicke der Außenscheibe und der Innenscheibe beträgt typischerweise von 0,5 mm bis 5 mm, bevorzugt von 1 mm bis 3 mm.

Die Außenscheibe und die Innenscheibe sind durch eine polymere Zwischenschicht miteinander verbunden. Damit ist gemeint, dass der Großteil der Zwischenschicht aus einem polymeren, typischerweise thermoplastischen Material ausgebildet ist und für de Haftung zwischen den Scheiben sorgt. Dieses thermoplastische Material ist typischerweise außerhalb des Bereichs mit den erfindungsgemäßen Keileinlagen angeordnet und aus mindestens einer thermoplastischen Folie ausgebildet. Die Keileinlagen selbst können ebenfalls aus einem polymeren Material ausgebildet sein. Die Keileinlagen können aber auch aus nicht-polymeren organischen oder anorganischen Materialen ausgebildet sein, beispielsweise einem kristallinen Material.

Das Ziel der Erfindung ist die Vergrößerung des erforderlichen Winkels zwischen Sensor und Verbundscheibe. Dies kann dadurch erreicht werden, dass die erste Keileinlage einen größeren Brechungsindex aufweist als die Außenscheibe und die Innenscheibe. Der Brechungsindex der ersten Keileinlage beträgt dabei bevorzugt von 1,6 bis 2,0, besonders bevorzugt von 1,65-1,8. Der Fachmann kann das Material der Keileinlagen grundsätzlich frei wählen, solange es einen geeigneten Brechungsindex aufweist und den optischen Anforderungen hinsichtlich Transparenz genügt. Als Material für die erste Keileinlage können beispielsweise Kunststoffe gewählt werden, die für Brillengläser gebräuchlich sind mit Brechungsindizes von etwa 1,5 bis 1,74 kommerziell verfügbar sind, beispielsweise Polycarbonat (PC) wie Polyallyldiglycolcarbonat (PADC).

Alternativ kann die zweite Keileinlage einen geringeren Brechungsindex aufweisen als die Außenscheibe und die Innenscheibe. Der Brechungsindex der ersten Keileinlage beträgt dabei bevorzugt von 1,1 bis 1,45, besonders bevorzugt von 1,2-1,4. Die zweite Keileinlage kann beispielsweise Magnesiumfluorit enthalten oder daraus bestehen.

Ein besonders vorteilhafter Effekt wird durch eine Kombination der vorstehend beschriebenen Ausgestaltungen erreicht, wobei die erste Keileinlage einen Brechungsindex aufweist, der größer ist als der Brechungsindex der Außenscheibe und der Innenscheibe und die zweite Keileinlage einen Brechungsindex aufweist, der kleiner ist als der Brechungsindex der Außenscheibe und der Innenscheibe, mit den vorstehend angegebenen bevorzugten Wertebereichen. Dadurch kann die zu detektierende Strahlung besonders effizient abgelenkt werden.

Es ist aber ausreichend, dass nur eine der Keileinlagen einen von den Scheiben verschiedenen Brechungsindex aufweist, um die erfindungsgemäße Wirkung zu erreichen. So kann die erste Keileinlage einen Brechungsindex aufweisen, der größer ist als der Brechungsindex der Scheiben, während die zweite Keileinlage einen Brechungsindex aufweist, der im Wesentlichen demjenigen der Glasscheiben entspricht. Beispielsweise kann die erste Keileinlage aus Polycarbonat wie PADC gefertigt sein und die zweite Keileinlage aus PVB oder PMMA.

Die polymere Zwischenschicht außerhalb des Bereichs mit den erfindungsgemäßen Keileinlagen ist aus mindestens einer thermoplastischen Folie (Verbindungsfolie) ausgebildet, bevorzugt enthaltend Ethylenvinylacetat (EVA), Polyvinylbutyral (PVB) oder Polyurethan (PU) oder Gemische oder Copolymere oder Derivate davon, besonders bevorzugt PVB. Die Dicke der thermoplastischen Folie beträgt bevorzugt von 0,2 mm bis 2 mm, besonders bevorzugt von 0,3 mm bis 1 mm, beispielsweise 0,38 mm oder 0,76 mm. Die Zwischenschicht kann auch aus mehreren übereinandergelegten Folien ausgebildet sein oder aus Schichten unterschiedlichen Materials ausgebildet sein, wie es beispielsweise bei Folien mit geräuschmindernden Eigenschaften der Fall ist.

Da der Keilwinkel der Keileinlagen hauptsächlich durch die Dicke der Zwischenschicht begrenzt wird, wird in einer bevorzugten Ausgestaltung eine dickere Zwischenschicht als gewöhnlich verwendet. Die typische Dicke einer Zwischenschicht von Windschutzscheiben und anderen Fahrzeugverglasungen beträgt 0,76 mm. Die erfindungsgemäß bevorzugte Dicke der Zwischenschicht beträgt mindestens 1 mm, beispielsweise von 1,2 bis 1,8 mm. Damit werden die erreichbaren Keilwinkel vergrößert, ohne das das Verbundglas insgesamt zu dick wird, um für Fahrzeugverglasungen akzeptabel zu sein.

In einer bevorzugten Ausgestaltung weist die thermoplastische Verbindungsfolie eine Aussparung auf, in welche die Keileinlagen passgenau eingesetzt werden können, so dass die Keileinlagen rahmenartig von der thermoplastischen Verbindungsfolie umgeben sind. Die rahmenartige Einfassung kann alternativ auch dadurch erreicht werden, dass mehrere Stücke oder Streifen der Verbindungsfolie um die Keileinlagen herum zusammengesetzt werden.

Die Keileinlagen können optional über jeweils eine dünne Klebefolie mit der Oberfläche der Außenscheibe und der Innenscheibe verbunden sein. Die Klebefolie enthält bevorzugt EVA, PVB oder PU oder Gemische oder Copolymere oder Derivate davon, besonders bevorzugt PVB. Die Dicke der Klebefolie beträgt bevorzugt von 0,02 mm bis 0,15 mm. Da jedoch die Haftung der Scheiben durch die großflächige Verbindungsfolie sichergestellt wird, ist die Verwendung der Klebefolien nicht wesentlich. Selbst wenn die Scheibenoberflächen und die Keileinlagen keine haftende Verbindung ausbilden, wird die durch die Verbindungsfolie erreichte Stabilität des Verbundes durch die Keileinlagen nicht signifikant herabgesetzt. Die Keileinlagen werden durch das passgenaue Einsetzten in eine Aussparung der Verbindungsfolie und den Anpressdruck der beiden Glasscheiben sicher fixiert.

Die Dicke des Quaders aus den Keileinlagen, gegebenenfalls zuzüglich der Dicke der Klebefolien, sollte natürlich der Dicke der mindestens einen Verbindungsfolie außerhalb des Sensorbereichs entsprechen, um einen Zwischenschicht konstanter Dicke und einen stabilen Verbund zu gewährleisten.

Ein weiterer Aspekt der Erfindung ist eine Anordnung, umfassend eine erfindungsgemäße Fahrzeug-Verbundscheibe und einen daran angebrachten optischen Sensor, der an der von der Zwischenschicht abgewandten, innenraumseitigen Oberfläche der Innenscheibe befestigt ist und auf den Sensorbereich der Verbundscheibe, also den Bereich mit den Keileinlagen gerichtet ist. Der Detektionsstrahlengang des Sensors verläuft also durch die Keileinlagen in der Verbundscheibe hindurch. Der optische Sensor ist bevorzugt eine optische Kamera, das heißt eine Kamera mit Empfindlichkeit im sichtbaren Spektralbereich, beispielsweise eine Fahrspur-Kamera oder eine Kamera für ein *Augmented Reality-Head-*Up-Displays.

Durch die erfindungsgemäßen Keileinlagen kann der Sensor in einem größeren Winkel zur Verbundscheibe angeordnet werden, wodurch der Sensorbereich der Verbundscheibe kleiner wird. Dieser Effekt ist aus einfachen geometrischen Überlegungen heraus verständlich: der Sensorbereich entspricht der Schnittfläche durch den Detektionskegel des Sensors an der Position der Verbundscheibe. Diese Fläche ist minimal bei einem Winkel von 90° und nimmt mit kleiner werdendem Winkel zu. Typischerweise sind Windschutzscheiben mit einem Einbauwinkel zur Vertikalen von etwa 60° angeordnet. Bei gekrümmten Scheiben wird zur Bestimmung des Einbauwinkels die Tangentialebene in der geometrischen Scheibenmitte herangezogen. Ein herkömmlicher nach vorne gerichteter Sensor mit horizontaler Ausrichtung schließt folglich einen Winkel von etwa 30° zur Windschutzscheibe ein. Durch die Ablenkung des Detektionsstrahlengangs mittels der einfindungsgemäßen Keileinlagen kann der Winkel vorteilhaft vergrößert werden. In einer bevorzugten Ausgestaltung ist der Sensor mit einem Winkel von 45° bis 90° zur Verbundscheibe angeordnet. Zur exakten Bestimmung auch bei gekrümmten Scheiben ist der Winkel zwischen der zentralen Detektionsrichtung des Sensors (Mitte des Detektionskegels) und der Tangentialebene in der geometrischen Mitte des Sensorbereichs auf der innenraumseitigen Oberfläche der Innenscheibe heranzuziehen.

Die Außenscheibe, die Innenscheibe oder die Zwischenschicht können klar und farblos, aber auch getönt, getrübt oder gefärbt sein. Die Gesamttransmission durch die Verbundscheibe beträgt in einer bevorzugten Ausgestaltung größer 70%, insbesondere wenn die Verbundscheibe eine Windschutzscheibe ist. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben. Die Außenscheibe und die Innenscheibe können aus nicht vorgespanntem, teilvorgespanntem oder vorgespanntem Glas bestehen.

Die Fahrzeugscheibe ist bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 m liegen. Das Verbundglas kann aber auch plan sein, beispielsweise wenn es als Scheibe für Busse, Züge oder Traktoren vorgesehen ist.

Die Außenscheibe und/oder die Innenscheibe weisen bevorzugt einen Abdeckdruck auf. Abdeckdrucke sind für Fahrzeugscheiben außerhalb des zentralen Sichtbereichs üblich, um Anbauteile zu verdecken oder den Klebstoff, mit dem die Fahrzeugscheibe mit der Karosserie verbunden ist, vor UV-Strahlung zu schützen. Der Abdeckdruck besteht typischerweise aus einem im Siebdruckverfahren aufgebrachten und eingebrannten schwarzen oder dunklen Emaille. Bevorzugt umrahmt der Abdeckdruck den Sensorbereich der Verbundscheibe umlaufend, um den dahinterliegenden Sensor zu verdecken.

Ein besonderer Vorteil der Erfindung ist es, das das strahlungslenkende Element direkt in der Verbundscheibe integriert ist, und keine Anbauteile wie Koppel- oder Lichtleitkörper nötig sind. In einer bevorzugten Ausgestaltung weist die Verbundscheibe daher keine Anbauteile zwischen Sensor und Innenscheibe auf.

Die Erfindung umfasst außerdem ein Verfahren zur Herstellung einer Fahrzeug-Verbundscheibe, wobei
(a) eine Außenscheibe und eine Innenscheibe mit eine dazwischenliegenden polymeren Zwischenschicht flächig aufeinander angeordnet werden, wobei ein Bereich der Zwischenschicht aus einer ersten Keileinlage und einer zweiten Keileinlage unterschiedlichen Materials ausgebildet wird, die keilförmig sind und jeweils eine Keilfläche aufweisen, wobei die Keilflächen aufeinander gelegt werden, so dass in der Richtung von einer Unterkante zu einer Oberkante der Verbundscheibe die Dicke der ersten Keileinlage zunimmt und die Dicke der zweiten Keileinlage abnimmt, und wobei mindestens eine Keileinlage einen Brechungsindex aufweist, der sich vom Brechungsindex der Außenscheibe und der Innenscheibe unterscheidet,
(b) die Außenscheibe über die Zwischenschicht mit der Innenscheibe durch Lamination verbunden wird.

Die Zwischenschicht umfasst außer den Keileinlagen bevorzugt mindestens eine thermoplastische Folie, die bevorzugt eine passgenaue Aussparung für die Keileinlagen aufweist. Die beiden Scheiben und die dazwischenliegende Folie mit den Keileinlagen werden natürlich flächig und im Wesentlichen kongruent übereinander angeordnet. Der Stapel wird anschließend üblichen Verfahren zur Erzeugung von Verbundscheiben unterworfen. Dabei wird die Außenscheibe über eine polymere Zwischenschicht, welche während des Verfahrens aus der mindestens einen thermoplastischen Folie mit den Keileinlagen gebildet wird, mit der Innenscheibe durch Lamination verbunden. Dies erfolgt mit üblichen, dem Fachmann an sich bekannten Methoden, beispielsweise Autoklavverfahren, Vakuumsackverfahren, Vakuumringverfahren, Kalanderverfahren, Vakuumlaminatoren oder Kombinationen davon. Die Verbindung von Außenscheibe und Innenscheibe dabei erfolgt üblicherweise unter Einwirkung von Hitze, Vakuum und/oder Druck.

Zwischen die Keileinlagen und die jeweils zugeordnete Glasscheibe kann eine Klebefolie eingelegt werden.

Soll die Fahrzeug-Verbundscheibe eine Biegung aufweisen, wie insbesondere für Personenkraftwagen üblich, so werden die Scheiben vor dem Laminieren einem Biegeprozess unterzogen, beispielsweise durch Schwerkraftbiegen, Saugbiegen und/oder Pressbiegen. Typische Biegetemperaturen betragen von 500°C bis 700°C.

Bevorzugt wird vor dem Laminieren und vor dem optionalen Biegen ein opaker Abdeckdruck auf den Randbereich der Außenscheibe und/oder der Innenscheibe aufgebracht. Dazu wird typischerweise eine schwarze oder dunkle Emaille per Siebdruck aufgebracht und vor dem Laminieren, insbesondere vor dem Biegen oder während des Biegens, eingebrannt.

Die Erfindung umfasst außerdem die Verwendung einer erfindungsgemäßen Fahrzeug-Verbundscheibe als Windschutzscheibe eines Fahrzeugs, bevorzugt eines Kraftfahrzeugs.

In einer bevorzugten Ausführung ist an der innenraumseitigen, von der Zwischenschicht abgewandten Oberfläche der Innenscheibe ein optischer Sensor befestigt, der auf den Bereich der Verbundscheibe mit den Keileinlagen gerichtet ist und der eine optische, das heißt im sichtbaren Spektralbereich empfindliche Kamera ist, beispielsweise eine Fahrspur-Kamera oder eine Kamera für ein *Augmented Reality*-Head-Up-Displays.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: einen Querschnitt durch eine Ausgestaltung der erfindungsgemäßen Fahrzeug-Verbundscheibe mit optischem Sensor,
- Fig. 2: eine perspektivische Darstellung einer erfindungsgemäßen Keileinlage,
- Fig. 3: einen perspektivische Darstellung zweier erfindungsgemäß aufeinander gelegter Keileinlagen und
- Fig. 4: ein Flussdiagramm einer Ausführungsform des erfindungsgemäßen Verfahrens.

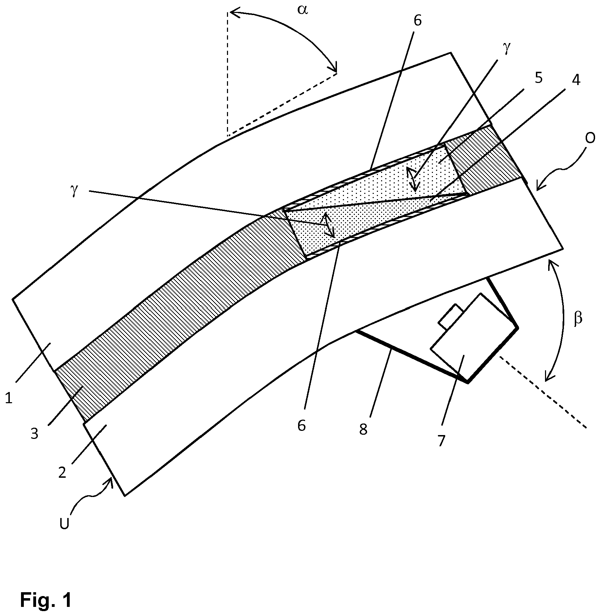

Fig. 1 zeigt eine erfindungsgemäße Fahrzeug-Verbundscheibe, die als Windschutzscheibe eines Personenkraftwagens vorgesehen ist. Die Verbundscheibe ist aufgebaut aus einer Außenscheibe 1 und einer Innenscheibe 2, die mittels einer thermoplastischen Verbindungsfolie 3 flächig miteinander verbunden sind. Die Außenscheibe 1 und die Innenscheibe 2 bestehen aus Kalk-Natron-Glas und weisen beispielsweise eine Dicke von 2,1 mm auf. Die Verbindungsfolie 3 ist eine 0,76 mm dicke PVB-Folie. Die Innenscheibe 2 ist in Einbaulage dem Innenraum des Fahrzeugs zugewandt. Die Außenscheibe 1 ist in Einbaulage der äußeren Umgebung des Fahrzeugs zugewandt. Die Verbundscheibe weist eine Oberkante O und eine Unterkante U auf. Die Oberkante O weist in Einbaulage nach oben zum Fahrzeugdach, die Unterkante U weist in Einbaulage nach unten zum Motorraum.

Die innenraumseitige Oberfläche der Außenscheibe ist über die thermoplastische Zwischenschicht mit der außenseitigen Oberfläche der Innenscheibe verbunden. Üblicherweise wird die außenseitige Oberfläche der Außenscheibe als "Seite I" bezeichnet, die innenraumseitige Oberfläche der Außenscheibe als "Seite II", die außenseitige Oberfläche der Innenscheibe als "Seite III" und die innenraumseitige Oberfläche der Innenscheibe als "Seite IV".

Auf der innenraumseitigen Oberfläche der Innenscheibe 2 ist eine Kamera 7 in einem Gehäuse 8 angeordnet. Die Kamera ist beispielsweise eine Fahrspurkamera. Die Detektionsrichtung der Kamera 7 ist außenseitig der Verbundscheibe in etwa horizontal nach vorne gerichtet. Strahlung, die in einem sogenannten Sensorbereich horizontal durch die Verbundscheibe tritt, wird durch die Kamera detektiert.

Die Verbundscheibe ist, wie für Windschutzscheiben üblich, mit einem Einbauwinkel α von 60° zur Vertikalen in das Fahrzeug eingebaut. Bei einer herkömmlichen Verbundscheibe müsste die Kamera 7 darum horizontal ausgerichtet werden, was zu einem spitzen Winkel β von etwa 30° zur innenraumseitigen Oberfläche der Innenscheibe 2 führen würde. Bei der erfindungsgemäßen Verbundscheibe liegt der Sensorbereich stattdessen in einem Bereich, in dem die Zwischenschicht durch zwei Keileinlagen 4, 5 ausgebildet ist.

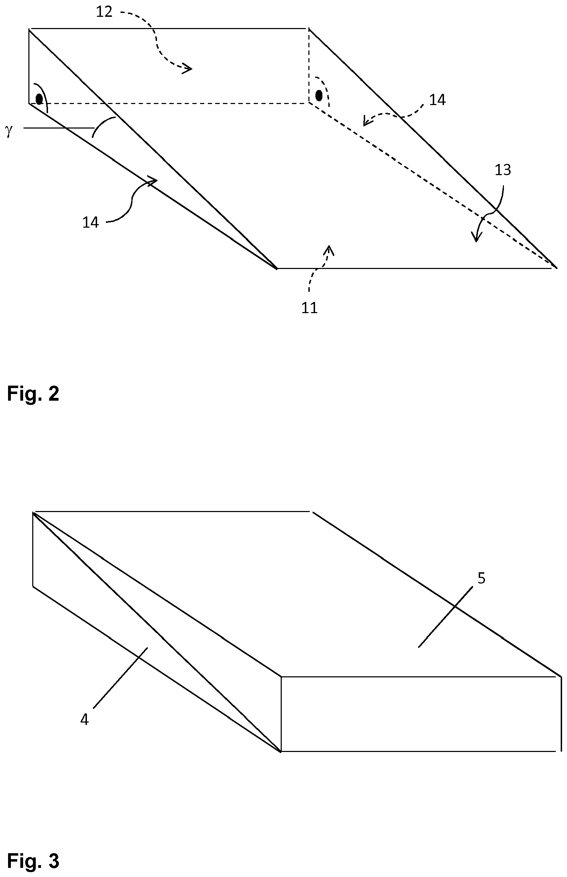

Fig. 2 zeigt die Grundform der Keileinlagen 4, 5. Sie weisen eine rechtwinklige Keilform auf. Sie weisen eine lange Grundfläche 11 und eine kurze Grundfläche 12 auf, die in einen im Wesentlichen rechten Winkel über eine Verbindungskante miteinander verbunden sind. Die der rechtwinkligen Verbindungskanten gegenüberliegenden Seitenkante der Grundfläche 11, 12 sind durch eine sogenannte Keilfläche 13 miteinander verbunden. Die Form wird abgeschlossen durch zwei dreieckige Stirnflächen 14. Der Winkel zwischen langer Grundfläche 11 und Keilfläche 13 wird als Keilwinkel γ bezeichnet.

Fig. 3 zeigt die erfindungsgemäße relative Anordnung der beiden Keileinlagen 4, 5. Die Keilflächen 13 der Keileinlagen 4, 5 sind komplementär aufeinander gelegt, so dass die Keileinlagen 4, 5 gemeinsam eine Art Quader bilden, in dem die beiden langen Grundflächen 11 einander gegenüberliegen, ebenso wie die beiden kurzen Grundflächen 12. Die beiden rechtwinkligen Verbindungskanten der Keileinlagen 4, 5 liegen einander diagonal gegenüber und bilden gegenüberliegende, nicht benachbarte Seitenkanten des Quaders. Anders ausgedrückt sind die beiden Keileinlagen 4, 5 über ihre Keilflächen 13 aufeinander gelegt, so dass in einer Raumrichtung die Dicke einer Keileinlage 4 zunimmt und die Dicke der anderen Keileinlage 5 abnimmt.

In Fig. 1 wird gezeigt, wie die Keileinlagen 4, 5 in der Verbundscheibe angeordnet sind. Die Keilrichtung (also die Richtung, in der sich die Dicke der Keileinlage ändert) verläuft vertikal, also in der Richtung zwischen Unterkante U und Oberkante O. Die Dicke der ersten Keileinlage 4 nimmt in der Richtung von der Unterkante U zur Oberkante O zu. Dem zufolge nimmt die Dicke der zweiten Keileinlage 5 in der Richtung von der Unterkante U zur Oberkante O ab. Die lange Grundfläche 11 der ersten Keileinlage 4 ist über eine 50 µm dicke PVB-Folie mit der innenraumseitigen Oberfläche der Außenscheibe 1 verbunden. Die lange Grundfläche 11 der zweiten Keileinlage 5 ist ebenfalls über eine 50 µm dicke PVB-Folie mit der außenseitigen Oberfläche der Innenscheibe 2 verbunden. Die kurzen Grundflächen 12 verlaufen etwa senkrecht zwischen den Scheiben 1, 2.

Die beiden Keileinlagen 4, 5 bestehen aus unterschiedlichem Material und weisen Brechungsindizes auf, die sich deutlich voneinander und vom Brechungsindex der Außenscheibe 1 und der Innenscheibe 2 unterscheiden. Die Scheiben 1, 2 aus Kalk-Natron-Glas weisen einen Brechungsindex von 1,52 auf. Die erste Keileinlage 4 besteht beispielsweise aus einem Kunststoff, der von der Firma Hoya unter dem Markennamen Eyvia 1.74 für Brillengläser vertrieben wird und einen Brechungsindex von 1,74 aufweist. Aber auch andere Kunststoffe für Brillengläser sind geeignet, beispielsweise die Produkte der Firma Hoya mit den Markennamen Eynoa 1.67 und Eyas 1.60,m wobei die Zahl im Markennamen jeweils den Brechungsindex angibt. Die zweite Keileinlage 5 besteht beispielsweise aus Magnesiumfluorit mit einem Brechungsindex von 1,38. Durch die unterschiedlichen Brechungsindizes und den Keilwinkel γ von beispielsweise 2° wird die horizontal von außen durch die Verbundscheibe tretende Strahlung nach unten gebrochen. Dadurch kann die Kamera 7 in einem weniger spitzen Winkel β von beispielsweise 60° zur innenraumseitigen Oberfläche der Innenscheibe 2 angeordnet werden. Dadurch kann der Platzbedarf des Sensorbereichs auf der Verbundscheibe vorteilhaft verringert werden. Der Sensorbereich ergibt sich nämlich aus der Schnittfläche, die aus dem Schnitt der Verbundscheibe durch den Detektionskegel der Kamera 7 hervorgeht. Die Größe dieser Schnittfläche ist minimal bei einem Winkel β von 90° und nimmt mit abnehmendem Wert von β zu. Der große Vorteil der Erfindung liegt in der Vergrößerung des Winkels β gegenüber einer herkömmlichen Verbundscheibe und die damit verbundene Verkleinerung des Sensorbereichs.

Wie in der Figur dargestellt sind Windschutzscheiben typischerweise gekrümmt. Dies hat zur Folge, dass die Form der Keileinlagen 4, 5 und des aus ihnen gebildeten Quaders leicht von der beschriebenen idealen Form abweicht, da sich die polymeren, flexiblen Keileinlagen 4, 5 der gebogenen Form anpasst.

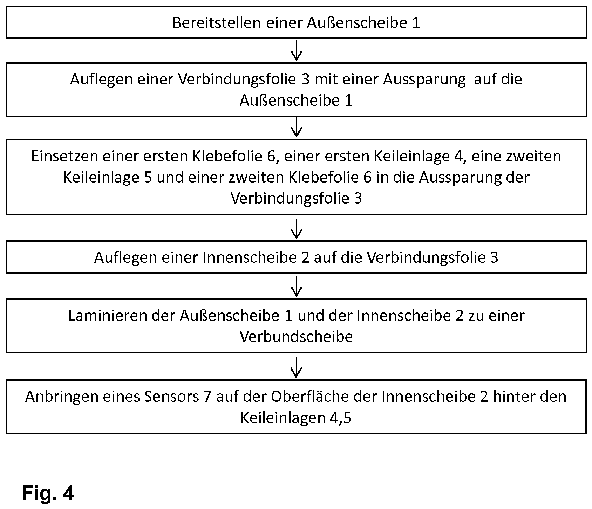

Fig. 4 zeigt ein Flussdiagramm eines Ausführungsbeispiels des erfindungsgemäßen Verfahrens zur Herstellung einer Fahrzeug-Verbundscheibe.

### Beispiel

Es wurden Simulationen durchgeführt, um den technischen Effekt der Erfindung zu untersuchen und demonstrieren. Bei den Simulationen wurde ein Einbauwinkel α der Verbundscheibe von 60° zugrunde gelegt. Eine Dicke der Zwischenschicht von 1,2 mm, ein Brechungsindex der Außenscheibe 1 und der Innenscheibe 2 von 1,52, ein Brechungsindex der ersten Keileinlage 4 von 1,78 und ein Brechungsindex der zweiten Keileinlage 5 von 1,38. Die Größe der Keileinlagen 4, 5 betrug 35mm (vertikal) x 30mm (horizontal). Die Keileinlagen 4, 5 wiesen einen Keilwinkel γ von 2,2° auf.

Die Simulation führte zu dem Ergebnis, dass der Einbauwinkel β der Kamera 7 um 3° vergrößert werden konnte durch die Lichtbrechung der Keileinlagen 4, 5. Dies führte zu einer Verkleinerung des Sensorbereichs der Scheibe um 70%.

### Bezugszeichenliste:

- (1): Außenscheibe
- (2): Innenscheibe
- (3): thermoplastische Verbindungsfolie
- (4): erste Keileinlage
- (5): zweite Keileinlage
- (6): Klebefolie
- (7): Sensor / Kamera
- (8): Gehäuse

- (11): lange Grundfläche
- (12): kurze Grundfläche
- (13): Keilfläche
- (14): Stirnflächen

- (α): Einbauwinkel der Verbundscheibe
- (β): Einbauwinkel des Sensors/der Kamera 7
- (γ): Keilwinkel der Keileinlagen 4, 5

- O: Oberkante/Dachkante der Verbundscheibe
- U: Unterkante/Motorkante der Verbundscheibe

## Patentansprüche

1. Fahrzeug-Verbundscheibe mindestens umfassend eine Außenscheibe (1) aus Glas und eine Innenscheibe (2) aus Glas, die über eine polymere Zwischenschicht miteinander verbunden sind,
wobei ein Bereich der Zwischenschicht aus einer ersten Keileinlage (4) und einer zweiten Keileinlage (5) unterschiedlichen Materials ausgebildet ist, die keilförmig sind und jeweils eine Keilfläche (13) aufweisen, wobei die Keilflächen (13) aufeinander gelegt sind, so dass in der Richtung von einer Unterkante (U) zu einer Oberkante (O) der Verbundscheibe die Dicke der ersten Keileinlage (4) zunimmt und die Dicke der zweiten Keileinlage (5) abnimmt,
wobei mindestens eine Keileinlage (4, 5) einen Brechungsindex aufweist, der sich vom Brechungsindex der Außenscheibe (1) und der Innenscheibe (2) unterscheidet.

2. Fahrzeug-Verbundscheibe nach Anspruch 1, wobei die erste Keileinlage (4) einen Brechungsindex aufweist, der größer ist als der Brechungsindex der Außenscheibe (1) und der Innenscheibe (2) und/oder die zweite Keileinlage (5) einen Brechungsindex aufweist, der kleiner ist als der Brechungsindex der Außenscheibe (1) und der Innenscheibe (2).

3. Fahrzeug-Verbundscheibe nach Anspruch 1 oder 2, wobei die Differenz zwischen dem Brechungsindex der Außenscheibe (1) und der Innenscheibe (2) und dem Brechungsindex der ersten Keileinlage (4) und/oder der zweiten Keileinlage mindestens 0,1 beträgt, bevorzugt mindestens 0,2.

4. Fahrzeug-Verbundscheibe nach einem der Ansprüche 1 bis 3, wobei die erste Keileinlage (4) einen Brechungsindex von 1,6 bis 2,0 aufweist, bevorzugt von 1,65-1,8.

5. Fahrzeug-Verbundscheibe nach Anspruch 4, wobei die erste Keileinlage (4) Polycarbonat (PC) enthält.

6. Fahrzeug-Verbundscheibe nach einem der Ansprüche 1 bis 5, wobei die zweite Keileinlage (5) einen Brechungsindex von 1,1 bis 1,45 aufweist, bevorzugt von 1,2 bis 1,4.

7. Fahrzeug-Verbundscheibe nach Anspruch 6, wobei die zweite Keileinlage (5) Magnesiumfluorit enthält.

8. Fahrzeug-Verbundscheibe nach einem der Ansprüche 1 bis 7, wobei die erste Keileinlage und die zweite Keileinlage einen Keilwinkel γ von mindestens 1° aufweisen.

9. Fahrzeug-Verbundscheibe nach einem der Ansprüche 1 bis 8, wobei die Keileinlagen (4, 5) über jeweils eine Klebefolie (6) mit der Oberfläche der Außenscheibe (1) und der Innenscheibe (2) verbunden sind.

10. Fahrzeug-Verbundscheibe nach einem der Ansprüche 1 bis 9, wobei die Keileinlagen (4, 5) rahmenartig von einer thermoplastischen Verbindungsfolie (3) umgeben sind.

11. Fahrzeug-Verbundscheibe nach einem der Ansprüche 1 bis 10, wobei an der von der Zwischenschicht abgewandten Oberfläche der Innenscheibe (2) ein optischer Sensor (7) befestigt ist, der auf den Bereich der Verbundscheibe mit den Keileinlagen (4, 5) gerichtet ist.

12. Fahrzeug-Verbundscheibe nach Anspruch 11, wobei der Sensor (7) mit einem Winkel (β) von 45° bis 90° zur Verbundscheibe angeordnet ist.

13. Verfahren zur Herstellung einer Fahrzeug-Verbundscheibe, wobei
(a) eine Außenscheibe (1) und eine Innenscheibe (2) mit eine dazwischenliegenden polymeren Zwischenschicht flächig aufeinander angeordnet werden,
wobei ein Bereich der Zwischenschicht aus einer ersten Keileinlage (4) und einer zweiten Keileinlage (5) unterschiedlichen Materials ausgebildet wird, die keilförmig sind und jeweils eine Keilfläche (13) aufweisen, wobei die Keilflächen (13) aufeinander gelegt werden, so dass in der Richtung von einer Unterkante (U) zu einer Oberkante (O) der Verbundscheibe die Dicke der ersten Keileinlage (4) zunimmt und die Dicke der zweiten Keileinlage (5) abnimmt,
und wobei mindestens eine Keileinlage (4, 5) einen Brechungsindex aufweist, der sich vom Brechungsindex der Außenscheibe (1) und der Innenscheibe (2) unterscheidet,
(b) die Außenscheibe (1) über die Zwischenschicht mit der Innenscheibe (2) durch Lamination verbunden wird.

14. Verwendung einer Fahrzeug-Verbundscheibe nach einem der Ansprüche 1 bis 12 als Windschutzscheibe eines Fahrzeugs, bevorzugt eines Kraftfahrzeugs.

15. Verwendung nach Anspruch 14, wobei an der von der Zwischenschicht abgewandten Oberfläche der Innenscheibe (2) ein optischer Sensor (7) befestigt ist, der auf den Bereich der Verbundscheibe mit den Keileinlagen (4, 5) gerichtet ist und der eine optische Kamera ist.

## Claims

1. Vehicle composite pane at least comprising an outer pane (1) made of glass and an inner pane (2) made of glass that are bonded to one another via a polymeric intermediate layer,
wherein a region of the intermediate layer is formed from a first wedge inlay (4) and a second wedge inlay (5) made of a different material, which are wedge-shaped and have in each case a wedge face (13), wherein the wedge faces (13) are positioned one atop the other such that in the direction from a lower edge (U) to an upper edge (O) of the composite pane, the thickness of the first wedge inlay (4) increases and the thickness of the second wedge inlay (5) decreases,
wherein at least one wedge inlay (4, 5) has a refractive index that differs from the refractive index of the outer pane (1) and of the inner pane (2).

2. Vehicle composite pane according to claim 1, wherein the first wedge inlay (4) has a refractive index that is greater than the refractive index of the outer pane (1) and of the inner pane (2) and/or the second wedge inlay (5) has a refractive index that is smaller than the refractive index of the outer pane (1) and of the inner pane (2).

3. Vehicle composite pane according to claim 1 or 2, wherein the difference between the refractive index of the outer pane (1) and of the inner pane (2) and the refractive index of the first wedge inlay (4) and/or of the second wedge inlay is at least 0.1, preferably at least 0.2.

4. Vehicle composite pane according to one of claims 1 through 3, wherein the first wedge inlay (4) has a refractive index of 1.6 to 2.0, preferably of 1.65 to 1.8.

5. Vehicle composite pane according to claim 4, wherein the first wedge inlay (4) contains polycarbonate (PC).

6. Vehicle composite pane according to one of claims 1 through 5, wherein the second wedge inlay (5) has a refractive index of 1.1 to 1.45, preferably of 1.2 to 1.4.

7. Vehicle composite pane according to claim 6, wherein the second wedge inlay (5) contains magnesium fluorite.

8. Vehicle composite pane according to one of claims 1 through 7, wherein the first wedge inlay and the second wedge inlay have a wedge angle γ of at least 1°.

9. Vehicle composite pane according to one of claims 1 through 8, wherein the wedge inlays (4, 5) are bonded to the surface of the outer pane (1) and of the inner pane (2) via an adhesive film (6) in each case.

10. Vehicle composite pane according to one of claims 1 through 9, wherein the wedge inlays (4, 5) are surrounded in a frame-like manner by a thermoplastic laminating film (3).

11. Vehicle composite pane according to one of claims 1 through 10, wherein fastened on the surface of the inner pane (2) facing away from the intermediate layer is an optical sensor (7) that is aimed at the region of the composite pane with the wedge inlays (4, 5).

12. Vehicle composite pane according to claim 11, wherein the sensor (7) is arranged at an angle (β) of 45° to 90° relative to the composite pane.

13. Method for producing a vehicle composite pane, wherein
(a) an outer pane (1) and an inner pane (2) are arranged areally one atop the other with a polymeric intermediate layer therebetween,
wherein a region of the intermediate layer is formed from a first wedge inlay (4) and a second wedge inlay (5) made of a different material, which are wedge-shaped and have in each case a wedge face (13), wherein the wedge faces (13) are placed one atop the other such that in the direction from a lower edge (U) to an upper edge (O) of the composite pane, the thickness of the first wedge inlay (4) increases and the thickness of the second wedge inlay (5) decreases,
and wherein at least one wedge inlay (4, 5) has a refractive index that differs from the refractive index of the outer pane (1) and of the inner pane (2),
(b) the outer pane (1) is bonded by lamination to the inner pane (2) via the intermediate layer.

14. Use of a vehicle composite pane according to one of claims 1 through 12 as a windshield of a vehicle, preferably a motor vehicle.

15. Use according to claim 14, wherein fastened on the surface of the inner pane (2) facing away from the intermediate layer is an optical sensor (7) that is aimed at the region of the composite pane with the wedge inlays (4, 5) and that is an optical camera.

## Revendications

1. Vitre feuilletée pour véhicule, comportant au moins une vitre extérieure (1) en verre et une vitre intérieure (2) en verre, qui sont reliées l'une à l'autre par une couche intermédiaire polymère,
dans laquelle une région de la couche intermédiaire est formée d'un premier insert en coin (4) et d'un second insert en coin (5) d'un matériau différent, qui sont en forme de coin et présentent chacun une surface en coin (13), les surfaces en coin (13) étant placées l'une sur l'autre de telle sorte que, dans la direction d'un bord inférieur (U) à un bord supérieur (O) de la vitre feuilletée, l'épaisseur du premier insert en coin (4) augmente et l'épaisseur du second insert en coin (5) diminue,
dans laquelle au moins un insert en coin (4, 5) présente un indice de réfraction qui est différent de l'indice de réfraction de la vitre extérieure (1) et de la vitre intérieure (2).

2. Vitre feuilletée pour véhicule selon la revendication 1, dans laquelle le premier insert en coin (4) présente un indice de réfraction qui est supérieur à l'indice de réfraction de la vitre extérieure (1) et de la vitre intérieure (2) et/ou le second insert en coin (5) présente un indice de réfraction qui est plus petit que l'indice de réfraction de la vitre extérieure (1) et de la vitre intérieure (2).

3. Vitre feuilletée pour véhicule selon l'une des revendications 1 ou 2, dans laquelle la différence entre l'indice de réfraction de la vitre extérieure (1) et de la vitre intérieure (2) et l'indice de réfraction du premier insert en coin (4) et/ou du second insert en coin est d'au moins 0,1, de préférence d'au moins 0,2.

4. Vitre feuilletée pour véhicule selon l'une des revendications 1 à 3, dans laquelle le premier insert en coin (4) présente un indice de réfraction de 1,6 à 2,0, de préférence de 1,65-1,8.

5. Vitre feuilletée pour véhicule selon la revendication 4, dans laquelle le premier insert en coin (4) contient du polycarbonate (PC).

6. Vitre feuilletée pour véhicule selon l'une des revendications 1 à 5, dans laquelle le second insert en coin (5) présente un indice de réfraction de 1,1 à 1,45, de préférence de 1,2 à 1,4.

7. Vitre feuilletée pour véhicule selon la revendication 6, dans laquelle le second insert en coin (5) contient du fluorite de magnésium.

8. Vitre feuilletée pour véhicule selon l'une des revendications 1 à 7, dans laquelle le premier insert en coin et le second insert en coin présentent un angle de coin γ d'au moins 1°.

9. Vitre feuilletée pour véhicule selon l'une des revendications 1 à 8, dans laquelle les inserts en coin (4, 5) sont reliés avec la surface de la vitre extérieure (1) et de la vitre intérieure (2) chacun au moyen d'un film adhésif (6).

10. Vitre feuilletée pour véhicule selon l'une des revendications 1 à 9, dans laquelle les inserts en coin (4, 5) sont entourés par une feuille de liaison thermoplastique (3) sous forme de cadre.

11. Vitre feuilletée pour véhicule selon l'une des revendications 1 à 10, dans laquelle, sur la surface de la vitre intérieure (2) tournée à l'opposé de la couche intermédiaire, est fixé un détecteur optique (7) qui est dirigé vers la région de la vitre feuilletée ayant les inserts en coin (4, 5).

12. Vitre feuilletée pour véhicule selon la revendication 11, dans laquelle le détecteur (7) est disposé avec un angle (β) de 45° à 90° par rapport à la vitre feuilletée.

13. Procédé de fabrication d'une vitre feuilletée pour véhicule, dans lequel
(a) une vitre extérieure (1) et une vitre intérieure (2) sont disposées l'une sur l'autre à plat avec une couche intermédiaire polymère entre elles,
une région de la couche intermédiaire étant formée d'un premier insert en coin (4) et d'un second insert en coin (5) d'un matériau différent, qui sont en forme de coin et présentent chacun une surface en coin (13), les surfaces en coin (13) étant placées l'une sur l'autre de telle sorte que, dans la direction d'un bord inférieur (U) à un bord supérieur (O) de la vitre feuilletée, l'épaisseur du premier insert en coin (4) augmente et l'épaisseur du second insert en coin (5) diminue,
et au moins un insert en coin (4, 5) présente un indice de réfraction qui est différent de l'indice de réfraction de la vitre extérieure (1) et de la vitre intérieure (2) ;
(b) la vitre extérieure (1) est reliée par la couche intermédiaire à la vitre intérieure (2) par laminage.

14. Utilisation d'une vitre feuilletée pour véhicule selon l'une des revendications 1 à 12, en tant que pare-brise d'un véhicule, de préférence un véhicule automobile.

15. Utilisation selon la revendication 14, dans laquelle, sur la surface de la vitre intérieure (2) tournée à l'opposé de la couche intermédiaire, est fixé un détecteur optique (7) qui est dirigé vers la région de la vitre feuilletée ayant les inserts en coin (4, 5) et qui est une caméra optique.
